# EUROPEAN PATENT SPECIFICATION

(11) **EP 4 151 927 B1**
(45) Date of publication and mention of the grant of the patent: **08.01.2025**
(21) Application number: 21805149.8
(22) Date of filing: 22.04.2021
(51) Int. Cl.: F25B 37/00, F28F 25/04, F25B 39/02, F25B 35/02, F25B 15/06, F28D 3/02, F25B 15/04, F28D 3/04, F25B 15/00

(54) **HEAT EXCHANGE UNIT FOR ABSORPTION-TYPE REFRIGERATOR, ABSORPTION-TYPE REFRIGERATOR, AND CORRESPONDING HEAT EXCHANGE METHOD**
WÄRMETAUSCHEREINHEIT FÜR ABSORPTIONSKÜHLSCHRANK, ABSORPTIONSKÜHLSCHRANK UND ENTSPRECHENDES WÄRMEAUSTAUSCHVERFAHREN
UNITÉ D'ÉCHANGE DE CHALEUR POUR RÉFRIGÉRATEUR DE TYPE À ABSORPTION, RÉFRIGÉRATEUR DE TYPE À ABSORPTION ET PROCÉDÉ D'ÉCHANGE DE CHALEUR CORRESPONDANT

(30) Priority: 14.05.2020 JP 2020085349
(43) Date of publication of application: 22.03.2023
(73) Proprietor: Panasonic Intellectual Property Management Co., Ltd., Osaka-shi, Osaka 540-6207 (JP)
(72) Inventor: KAWANO, Bunki, Osaka 540-6207 (JP); SHIMODAHIRA, Nobukazu, Osaka 540-6207 (JP); MATSUI, Masaru, Osaka 540-6207 (JP)
(74) Representative: Eisenführ Speiser
(86) International application number: PCT/JP2021/016356
(87) International publication number: WO 2021/230036

(56) References cited:
- JP-A- 2000 283 662
- JP-A- 2003 075 013
- JP-A- 2003 075 013
- JP-A- 2005 321 169
- JP-A- 2005 321 169
- JP-A- S5 417 370
- JP-U- S6 039 870
- JP-U- S6 039 870
- US-A- 5 680 772

## Description

### TECHNICAL FIELD

The present disclosure relates to a heat exchange unit for an absorption refrigerator, an absorption refrigerator, and a method for heat exchange.

### BACKGROUND ART

Liquid sprinkling devices having the liquid dripping configuration for absorption refrigerators are conventionally known.

For example, the liquid sprinkling device described in Patent Literature 1 includes a tray and a guide body. The tray is long for receiving the liquid to be sprinkled. The guide body has a large number of ports for dripping provided in the longitudinal direction, and the liquid is dripped through the ports. The guide body is provided with a damming wall, and the damming wall has a long-side dam portion and a short-side dam portion. The long-side dam portion dams a long-side open end of a liquid receiving portion of the guide body. The short-side dam portion dams a short-side open end of the liquid receiving portion. Furthermore, JP 2003 075013 A discloses a heat exchange unit and a method for heat exchange for an absorption refrigerator according to the preamble of independent claims 1 and 4, respectively.

### CITATION LIST

### Patent Literature

Patent Literature 1: JP H7-4782 A

### SUMMARY OF INVENTION

### Technical Problem

The present disclosure provides a heat exchange unit for an absorption refrigerator that is advantageous in increasing the wettability of heat transfer tubes relative to a solution having a higher viscosity than a refrigerant liquid that is inside an evaporator of an absorption refrigerator.

### Solution to Problem

A heat exchange unit for an absorption refrigerator according to the present disclosure includes:
a first container;
a first heat transfer tube group including a plurality of first heat transfer tubes arranged in rows and columns inside the first container;
a first drip feed having a plurality of first portions for dripping arranged along a longitudinal direction of the first heat transfer tubes, the first drip feed being configured to drip a refrigerant liquid from the first portions toward the first heat transfer tube group;
a second container;
a second heat transfer tube group including a plurality of second heat transfer tubes arranged in rows and columns inside the second container; and
a second drip feed having a plurality of second portions for dripping arranged along a longitudinal direction of the second heat transfer tubes, the second drip feed being configured to drip a solution from the second portions toward the second heat transfer tube group, wherein
an interval between the second portions adjacent to each other in the longitudinal direction of the second heat transfer tubes is smaller than an interval between the first portions adjacent to each other in the longitudinal direction of the first heat transfer tubes.

### Advantageous Effects of Invention

In the heat exchange unit for an absorption refrigerator according to the present disclosure, uniform liquid films are easily formed on the second heat transfer tubes owing to the small interval between droplets of the solution to be dripped from the plurality of second portions. Therefore, the heat exchange unit for an absorption refrigerator according to the present disclosure is advantageous in increasing the wettability of heat transfer tubes relative to a solution having a higher viscosity than a refrigerant liquid that is inside an evaporator of an absorption refrigerator.

### BRIEF DESCRIPTION OF DRAWINGS

FIG. 1 shows a heat exchange unit according to Embodiment 1.
FIG. 2A is a cross-sectional view showing a first drip feed and first heat transfer tubes of the heat exchange unit in FIG. 1.
FIG. 2B shows the cross section of the first drip feed and the first heat transfer tubes of the heat exchange unit in FIG. 1.
FIG. 3A is a cross-sectional view showing a second drip feed and second heat transfer tubes of the heat exchange unit in FIG. 1.
FIG. 3B shows the cross section of the second drip feed and the second heat transfer tubes of the heat exchange unit in FIG. 1.
FIG. 4 shows the cross section of a drip feed and heat transfer tubes according to a reference example not in accordance with the invention.
FIG. 5A shows the cross section of a second drip feed and second heat transfer tubes of a heat exchange unit of Embodiment 2 as of a time t.
FIG. 5B shows the cross section of the second drip feed and the second heat transfer tubes of the heat exchange unit of Embodiment 2 as of a time t + Δt.
FIG. 6A shows the cross section of the drip feed and the heat transfer tubes according to the reference example as of the time t.
FIG. 6B shows the cross section of the drip feed and the heat transfer tubes according to the reference example as of the time t + Δt.
FIG. 7 shows an absorption refrigerator of Embodiment 3.

### DESCRIPTION OF EMBODIMENTS

### (Findings on which the present disclosure is based)

At the time when the present inventors conceived of the present disclosure, devices such as sprinkling devices and spraying devices have been devised as a technique of enhancing the liquid wettability of heat transfer tubes in absorption refrigerators. It is difficult to adapt spraying devices to absorbers of absorption refrigerators, and from the viewpoint of making components compatible with evaporators and absorbers, sprinkling devices have been generally used in both evaporators and absorbers. Under such a situation, the present inventors focused on the fact that the solution wettability of heat transfer tubes of an absorber is lower than the refrigerant liquid wettability of heat transfer tubes of an evaporator, and got an idea of configuring a drip feed in absorbers so as to specialize in dripping the solution. The present inventors found difficulty, as a problem in achieving the idea, in spreading a high-viscosity solution that is dripped and adhered to heat transfer tubes, and came to constitute the subject matter of the present disclosure to solve the problem.

Thus, the present disclosure provides a heat exchange unit for an absorption refrigerator that is advantageous in increasing the wettability of heat transfer tubes relative to a solution having a higher viscosity than a refrigerant liquid that is inside an evaporator of an absorption refrigerator.

Embodiments will be described in detail below with reference to the drawings. However, an unnecessarily detailed description may be omitted. For example, a detailed description of the matters already well known and a repeated description of substantially the same configuration may be omitted.

### (Embodiment 1)

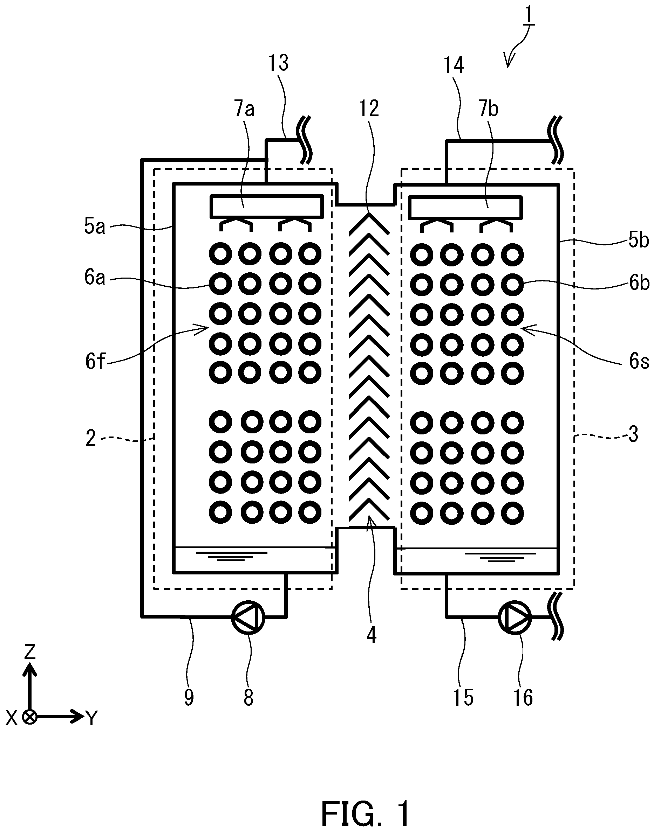

Embodiment 1 will be described below with reference to FIG. 1, FIG. 2A, FIG. 2B, FIG. 3A, and FIG. 3B. In the accompanying drawings, the Z-axis negative direction represents the gravity direction. The X-axis, the Y-axis, and the Z-axis are orthogonal to each other.

### [1-1. Configuration]

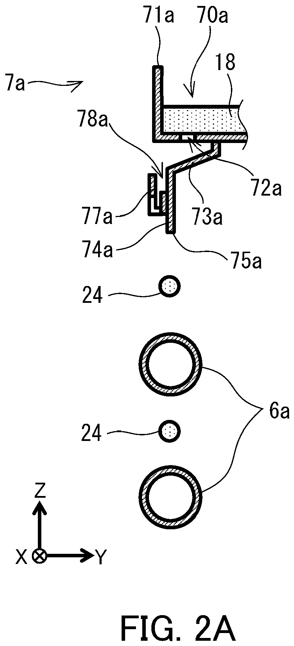

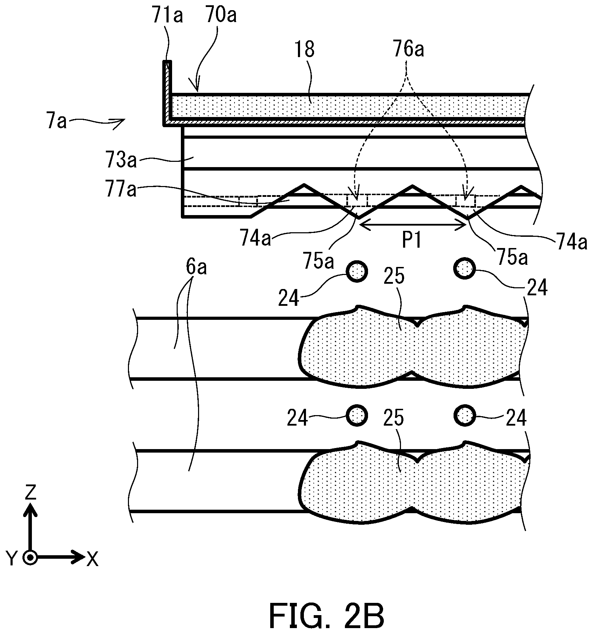

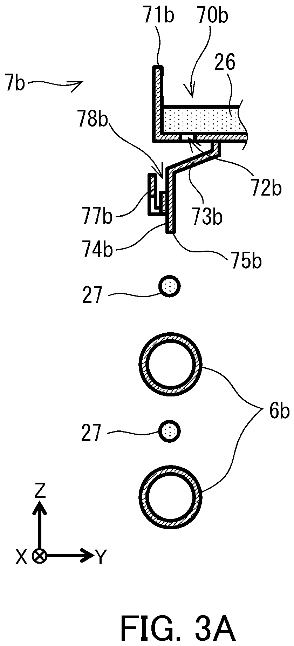

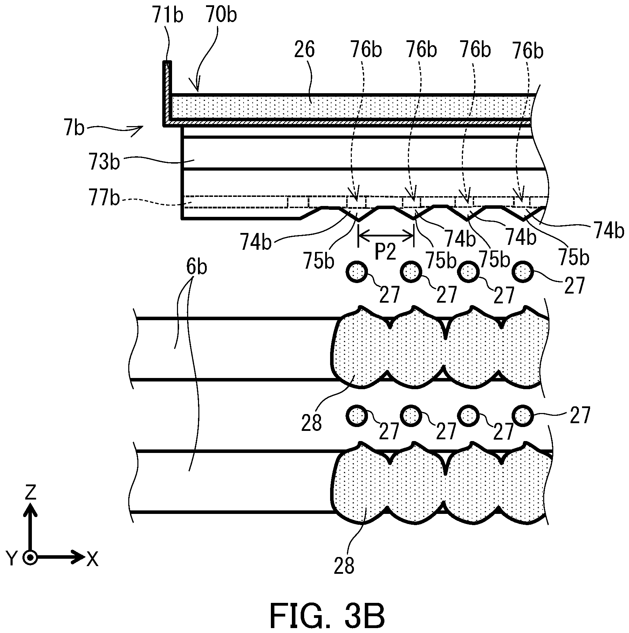

As shown in FIG. 1, a heat exchange unit 1 for an absorption refrigerator includes a first container 5a, a first heat transfer tube group 6f, a first drip feed 7a, a second container 5b, a second heat transfer tube group 6s, and a second drip feed 7b. The first heat transfer tube group 6f includes a plurality of first heat transfer tubes 6a arranged in rows and columns inside the first container 5a. As shown in FIG. 2A and FIG. 2B, the first drip feed 7a has a plurality of first portions 74a for dripping arranged along the longitudinal direction of the first heat transfer tubes 6a (the X-axis direction). In addition, the first drip feed 7a drips a refrigerant liquid from the first portions 74a toward the first heat transfer tube group 6f. The second heat transfer tube group 6s includes a plurality of second heat transfer tubes 6b arranged in rows and columns inside the second container 5b. As shown in FIG. 3A and FIG. 3B, the second drip feed 7b has a plurality of second portions 74b for dripping arranged along the longitudinal direction of the second heat transfer tubes 6b. In addition, the second drip feed 7b drips a solution from the second portions 74b toward the second heat transfer tube group 6s. As shown in FIG. 2B and FIG. 3B, an interval P2 between the second portions 74b adjacent to each other in the longitudinal direction of the second heat transfer tubes 6b (the X-axis direction) is smaller than an interval P1 between the first portions 74a adjacent to each other in the longitudinal direction of the first heat transfer tubes 6a.

As long as the interval P2 is smaller than the interval P1, the ratio of the interval P2 to the interval P1 (P2/P1) is not limited to a specific value.

The first drip feed 7a is disposed above the first heat transfer tube group 6f in the gravity direction. The second drip feed 7b is disposed above the second heat transfer tube group 6s in the gravity direction.

As shown in FIG. 1, the heat exchange unit 1 includes, for example, an evaporator 2, an absorber 3, and a vapor flow path 4. The heat exchange unit 1 is charged with a refrigerant and a solution. The evaporator 2 generates a refrigerant vapor. The absorber 3 absorbs the refrigerant vapor generated by the evaporator 2. The vapor flow path 4 is a flow path for guiding the refrigerant vapor generated by the evaporator 2 to the absorber 3.

The evaporator 2 is a shell-and-tube heat exchanger. The evaporator 2 is typically a sprinkling shell-and-tube heat exchanger. For example, in the case where a refrigerant, such as water, whose saturated vapor pressure at ordinary temperature (20°C±15°C) is a negative pressure is used, the water-level head of the refrigerant liquid tends to greatly influences the evaporation pressure in a flooded shell-and-tube heat exchanger. Accordingly, in the case where a refrigerant, such as water, is used, it is advantageous that the evaporator 2 is a sprinkling shell-and-tube heat exchanger.

The evaporator 2 includes the first container 5a, the first heat transfer tube group 6f, and the first drip feed 7a. The first container 5a is, for example, a container having thermal insulation properties and pressure resistance. In the first container 5a, the refrigerant liquid is stored. In addition, the first container 5a isolates the refrigerant vapor inside the first container 5a from the outside air, such as air at atmospheric pressure. In the first heat transfer tube group 6f, the plurality of first heat transfer tubes 6a are arranged in parallel to each other to define a plurality of rows in the gravity direction. The plurality of first heat transfer tubes 6a are arranged, for example, to form a square grid or a rectangular grid in a plane perpendicular to the longitudinal direction of the first heat transfer tubes 6a. The first heat transfer tube 6a is a tube made of copper or stainless steel. The first heat transfer tube 6a may have grooves in its inner surface and outer surface.

As shown in FIG. 2A and FIG. 2B, the first drip feed 7a has a tray 71a, a holder 73a, and a slit component 77a. The tray 71a has therein a storage space 70a, and a refrigerant liquid 18 is stored in the storage space 70a. For example, the tray 71a extends in an elongated shape in a direction parallel to the longitudinal direction of the first heat transfer tubes 6a. The tray 71a has a plurality of distribution holes 72a in its bottom portion. The plurality of distribution holes 72a are arranged, for example, along the direction parallel to the longitudinal direction of the first heat transfer tubes 6a. The holder 73a is joined to the bottom surface of the tray 71a. The holder 73a has an inclined surface just under the distribution hole 72a. In addition, the holder 73a has a lateral surface that is continuous from the inclined surface to extend toward the first heat transfer tube group 6f. An end portion of the lateral surface defines the first portion 74a. The first portion 74a is, for example, plate-like. The first portion 74a has a first pointed portion 75a that is tapered and protrudes toward the first heat transfer tube group 6f. The first pointed portion 75a has a ridge or a vertex. The first pointed portion 75a is, for example, plate-like. The slit component 77a is joined to the lateral surface of the holder 73a, and the slit component 77a and the lateral surface of the holder 73a have a drain 78a therebetween. In addition, as shown in FIG. 2B, the slit component 77a has an opening 76a near the first portion 74a. Thus, a plurality of openings 76a are arranged along the longitudinal direction of the first heat transfer tubes 6a.

The tray 71a, the holder 73a, and the slit component 77a each can be fabricated by, for example, pressing a stainless steel plate. The first drip feed 7a can be fabricated by welding the tray 71a, the holder 73a, and the slit component 77a.

The absorber 3 is a shell-and-tube heat exchanger. The absorber is typically a sprinkling shell-and-tube evaporator.

The absorber 3 includes the second container 5b, the second heat transfer tube group 6s, and the second drip feed 7b. The second container 5b is, for example, a container having thermal insulation properties and pressure resistance. In the second container 5b, the solution is stored. In addition, the second container 5b isolates the refrigerant vapor inside the second container 5b from the outside air, such as air at atmospheric pressure. In the second heat transfer tube group 6s, the plurality of second heat transfer tubes 6b are arranged in parallel to each other to define a plurality of rows in the gravity direction. The plurality of second heat transfer tubes 6b are arranged, for example, to form a square grid or a rectangular grid in a plane perpendicular to the longitudinal direction of the second heat transfer tubes 6b. The second heat transfer tube 6b is a tube made of copper or stainless steel. The second heat transfer tube 6b may have grooves in its inner surface and outer surface.

As shown in FIG. 3A and FIG. 3B, the second drip feed 7b has a tray 71b, a holder 73b, and a slit component 77b. The tray 71b has therein a storage space 70b, and a solution 26 is stored in the storage space 70b. For example, the tray 71b extends in a direction parallel to the longitudinal direction of the second heat transfer tubes 6b. The tray 71b has a plurality of distribution holes 72b in its bottom portion. The plurality of distribution holes 72b are arranged, for example, along the direction parallel to the longitudinal direction of the second heat transfer tubes 6b. The holder 73b is joined to the bottom surface of the tray 71b. The holder 73b has an inclined surface just under the distribution hole 72b. In addition, the holder 73b has a lateral surface that is continuous from the inclined surface to extend toward the second heat transfer tube group 6s. An end portion of the lateral surface defines the second portion 74b. The second portion 74b has a second pointed portion 75b that is tapered and protrudes toward the second heat transfer tube group 6s. The second portion 74b is, for example, plate-like. The second pointed portion 75b has a ridge or a vertex. The second pointed portion 75b is, for example, plate-like. The slit component 77b is joined to the lateral surface of the holder 73b, and the slit component 77b and the lateral surface of the holder 73b have a drain 78b therebetween. In addition, as shown in FIG. 3B, the slit component 77b has an opening 76b near the second portion 74b. Thus, a plurality of openings 76b are arranged along the longitudinal direction of the second heat transfer tubes 6b.

The tray 71b, the holder 73b, and the slit component 77b each can be fabricated by, for example, pressing a stainless steel plate. The second drip feed 7b can be fabricated by welding the tray 71b, the holder 73b, and the slit component 77b.

The vapor flow path 4 allows communication between the internal space of the first container 5a and the internal space of the second container 5b. In the vapor flow path 4, an eliminator 12 is disposed. The vapor flow path 4 includes a portion bent by the eliminator 12. This prevents the refrigerant liquid inside the first container 5a from being dragged into the flow of the refrigerant vapor and thus guided into the second container 5b.

The vapor flow path 4 is formed of a metal material, such as iron, having thermal insulation properties and pressure resistance. The eliminator 12 is fabricated by welding components shaped by pressing stainless steel plates.

The refrigerant to be charged in the heat exchange unit 1 is, for example, a hydrofluorocarbon (HFC)-based chlorofluorocarbon refrigerant or a natural refrigerant, such as water or ammonia. Furthermore, the solution to be charged in the heat exchange unit 1 is, for example, an aqueous solution of lithium bromide or an ionic fluid.

As shown in FIG. 1, the heat exchange unit 1 further includes, for example, a first pump 8, a circulation path 9, a first supply path 13, a second supply path 14, a discharge path 15, and a second pump 16.

The first pump 8 is, for example, a dynamic canned pump. The first pump 8 is disposed in the circulation path 9. One end of the circulation path 9 is connected to the first container 5a. Owing to the operation of the first pump 8, the refrigerant liquid stored in the first container 5a is pumped through the circulation path 9.

The first supply path 13 is connected to the first container 5a. The refrigerant liquid is supplied to the first container 5a through the first supply path 13. The refrigerant liquid supplied to the first container 5a is guided to the first drip feed 7a. The other end of the circulation path 9 is connected to the first circulation path 13, and the refrigerant liquid, which has passed through the circulation path 9, is supplied again to the first container 5a.

The second supply path 14 is connected to the second container 5b. The solution is supplied to the second container 5b through the second supply path 14. The solution supplied to the second container 5b is guided to the second drip feed 7b.

The discharge path 15 is connected to the second container 5b. The second pump 16 is disposed in the discharge path 15. The second pump 16 is, for example, a dynamic canned pump. Owing to the operation of the second pump 16, the solution stored in the second container 5b is pumped to the outside of the absorber 3.

The circulation path 9, the first supply path 13, the second supply path 14, and the discharge path 15 are each formed of, for example, a flow path member having thermal insulation properties and pressure resistance.

### [1-2. Operations]

As for the heat exchange unit 1 configured as above, its operations and functions will be described below. When the heat exchange unit 1 is left for a specific time period, such as at night, the internal temperature of the heat exchange unit 1 is equal to almost room temperature and uniform, and the internal pressure of the heat exchange unit 1 is uniform as well. For example, at a room temperature of 25°C, the internal temperature of the heat exchange unit 1 is also 25°C and uniform. In use of the heat exchange unit 1, a heat medium, such as water, that has absorbed heat from the outside of the heat exchange unit 1 flows through the first heat transfer tubes 6a of the first heat transfer tube group 6f. This heat medium flows into the first heat transfer tubes 6a at, for example, 12°C. Meanwhile, a heat medium, such as water, that has dissipated heat to the outside of the heat exchange unit 1 flows through the second heat transfer tubes 6b of the second heat transfer tube group 6s. This heat medium flows into the second heat transfer tubes 6b at, for example, 32°C.

When the use of the heat exchange unit 1 is started, the refrigerant liquid is first supplied into the evaporator 2 through the first supply path 13. The refrigerant liquid to be supplied has a temperature of, for example, about 35°C. As shown in FIG. 2A and FIG. 2B, the refrigerant liquid 18 supplied to the evaporator 2 is stored in the storage space 70a of the tray 71a of the first drip feed 7a. The refrigerant liquid 18 stored in the storage space 70a is distributed through the distribution holes 72a and the openings 76a, and is dripped from the first portions 74a toward the first heat transfer tube group 6f. The dripped refrigerant liquid 18 forms droplets 24, and then flows down the outer surfaces of the first heat transfer tubes 6a to be stored in a lower portion of the first container 5a. The refrigerant liquid 18 stored in the lower portion of the first container 5a is pumped by the pump 8 to be guided again into the evaporator 2 through the circulation path 9. Thus, the refrigerant liquid circulates inside and outside the evaporator 2. In the case where an absorption refrigerator including the heat exchange unit 1 operates at the rated load, the refrigerant liquid 18 has a flow rate of, for example, about 30 L/min and the refrigerant liquid 18 to be dripped by the first drip feed 7a also has an amount that is almost equal to the flow rate.

Next, the solution 26 is supplied to the absorber 3 through the second supply path 14. The solution 26 to be supplied has, for example, a temperature of about 50°C, a solute concentration of about 63 mass%, and a viscosity of about 0.00678 Pa•s. The viscosity of the solution 26 can be about 4.8 times the viscosity of the refrigerant liquid to be supplied to the evaporator 2. The solution 26 supplied to the absorber 3 is stored in the storage space 70b of the tray 71b of the second drip feed 7b. The solution 26 stored in the storage space 70b is distributed through the distribution holes 72b and the openings 76b, and is dripped from the second portions 74b toward the second heat transfer tube group 6s. The dripped solution 26 forms droplets 27, and then flows down the outer surfaces of the second heat transfer tubes 6b to be stored in a lower portion of the second container 5b. The solution 26 stored in the lower portion of the second container 5b is pumped by the second pump 16 to be discharged to the outside of the heat exchange unit 1 through the discharge path 15. In the case where the absorption refrigerator including the heat exchange unit 1 operates at the rated load, the solution 26, which is to be supplied through the second supply path 14 and dripped by the second drip feed 7b, has a flow rate of, for example, about 16 L/min. This flow rate is about half of the flow rate of the refrigerant liquid 18 in the case of the operation of the absorption refrigerator at the rated load.

When the solution 26 flows down the outer surfaces of the second heat transfer tubes 6b, the refrigerant vapor charged inside the heat exchange unit 1 is absorbed by the solution 26. This increases the temperature of the solution 26. On the other hand, the solution 26 is simultaneously cooled by the heat medium flowing through the second heat transfer tubes 6b, so that the absorption by the solution 26 in a supercooled state occurs continuously. This reduces the internal pressure of the heat exchange unit. Along with this, the refrigerant liquid 18 flowing down the outer surfaces of the first heat transfer tubes 6a evaporates. The evaporation of the refrigerant liquid 18 reduces the temperature of the refrigerant liquid 18. However, the refrigerant liquid 18 is simultaneously superheated by the heat medium flowing through the first heat transfer tubes 6a, so that the evaporation of the refrigerant liquid 18 occurs continuously. This keeps the internal pressure of the heat exchange unit 1 within a predetermined range, and thus the internal state of the heat exchange unit 1 becomes a steady state. The refrigerant liquid 18 in the steady state has a temperature of about 7°C and a viscosity of about 0.001427 Pa•s. On the other hand, the solution 26 to be discharged from the absorber 3 has a temperature of about 36°C, a solute concentration of about 57 mass%, and a viscosity of about 0.004768 Pa•s.

The operations of the first drip feed 7a and the second drip feed 7b will be described with reference to FIG. 2A, FIG. 2B, FIG. 3A, FIG. 3B, and FIG. 4.

As shown in FIG. 2A and FIG. 2B, the refrigerant liquid 18 supplied to the first drip feed 7a through the first supply path 13 is stored in the storage space 70a. The refrigerant liquid 18 stored in the storage space 70a flows down while being distributed through the plurality of distribution holes 72a arranged in the longitudinal direction of the tray 71a. The refrigerant liquid 18 is guided onto the inclined surface of the holder 73a to flow down the surface of the holder 73a. Next, the refrigerant liquid 18 is guided to the drain 78a to be stored again. Subsequently, the refrigerant liquid 18 is distributed again through the plurality of openings 76a arranged in the longitudinal direction of the tray 71a to flow down. The refrigerant liquid 18, which has passed through the openings 76a, is guided to the first portions 74a to be dripped from the first pointed portions 75a of the first portions 74a. The refrigerant liquid 18, which has been dripped from the first portions 74a, forms the droplets 24, and then spreads over the surfaces of the first heat transfer tubes 6a and flows down while forming liquid films 25.

As shown in FIG. 3A and FIG. 3B, the solution 26 supplied to the second drip feed 7b through the second supply path 14 is stored in the storage space 70b. The solution 26 stored in the storage space 70b flows down while being distributed through the plurality of distribution holes 72b arranged in the longitudinal direction of the tray 71b. The solution 26 is guided onto the inclined surface of the holder 73b to flow down the surface of the holder 73b. Next, the solution 26 is guided to the drain 78b to be stored again. Subsequently, the solution 26 is distributed again through the plurality of openings 76b arranged in the longitudinal direction of the tray 71b to flow down. The solution 26, which has passed through the opening 76b, is guided to the second portions 74b to be dripped from the second pointed portions 75b of the second portions 74b. The solution 26, which has been dripped from the second portions 74b, forms the droplets 27, and then spreads over the surfaces of the second heat transfer tubes 6b and flows down while forming liquid films 28.

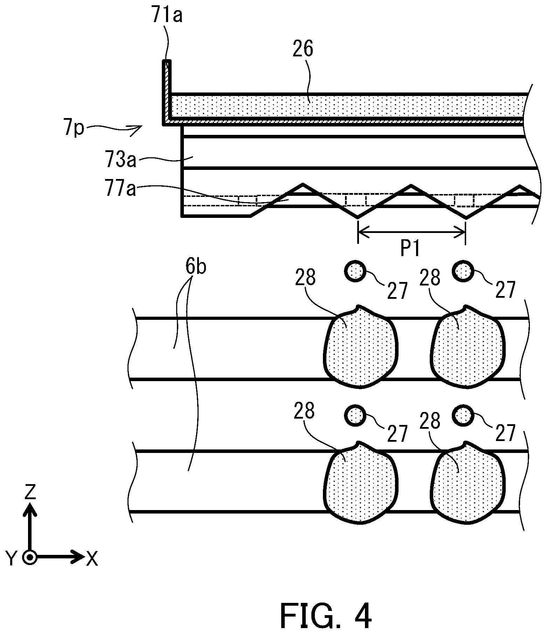

FIG. 4 is a view schematically showing a state in which the solution 26 is dripped by using a drip feed 7p according to a reference example, not in accordance with the invention, instead of the second drip feed 7b. The drip feed 7p has a similar configuration to that of the first drip feed 7a.

### [1-3. Effects, etc.]

As described above, in the present embodiment, the heat exchange unit 1 for an absorption refrigerator includes the first container 5a, the first heat transfer tube group 6f, the first drip feed 7a, the second container 5b, the second heat transfer tube group 6s, and the second drip feed 7b. The first heat transfer tube group 6f includes the plurality of first heat transfer tubes 6a arranged in rows and columns inside the first container 5a. The first drip feed 7a has the plurality of first portions 74a for dripping arranged along the longitudinal direction of the first heat transfer tubes 6a. In addition, the first drip feed 7a drips a refrigerant liquid from the first portions 74a toward the first heat transfer tube group 6f. The second heat transfer tube group 6s includes the plurality of second heat transfer tubes 6b arranged in rows and columns inside the second container 5b. The second drip feed 7b has the plurality of second portions 74b for dripping arranged along the longitudinal direction of the second heat transfer tubes 6b. In addition, the second drip feed 7b drips a solution from the second portions 74b toward the second heat transfer tube group 6s. The interval P2 between the second portions 74b adjacent to each other in the longitudinal direction of the second heat transfer tubes 6b (the X-axis direction) is smaller than the interval P1 between the first portions 74a adjacent to each other in the longitudinal direction of the first heat transfer tubes 6a.

As shown in FIG. 2A and FIG. 2B, the refrigerant liquid 18 to be dripped by the first drip feed 7a has a low viscosity, and also has a high flow rate. Consequently, even in the case where the interval P1 is relatively large, a favorable wettability of the first heat transfer tubes 6a relative to the refrigerant liquid 18 is easily achieved. On the other hand, as shown in FIG. 4, in the case where the solution 26 is dripped by using the drip feed 7p having the same configuration as the first drip feed 7a, the liquid films 28 to be formed on the surfaces of the second heat transfer tubes 6b do not spread easily. This is because the viscosity of the solution 26 is as high as about 4.8 times the viscosity of the refrigerant liquid 18. Accordingly, using the drip feed 7p increases the area of portions that do not get wet with the solution 26 on the surfaces of the second heat transfer tubes 6b. Consequently, it is difficult to achieve a favorable wettability of the second heat transfer tubes 6b relative to the solution 26. In contrast, according to the present embodiment, since the interval P2 is smaller than the interval P1, dripping the solution 26 by using the second drip feed 7b reduces the interval between the droplets 27. This forms the liquid films 28 uniformly on the surfaces of the second heat transfer tubes 6b. Consequently, a high wettability of the second heat transfer tubes 6b relative to the solution 26 is easily achieved.

According to the present embodiment, it is possible to provide a method for heat exchange including the following matters (I), (II), and (III).
(I) A first heat medium is supplied into the plurality of first heat transfer tubes 6a included in the first heat transfer tube group 6f, where the first heat transfer tubes 6a are arranged in rows and columns inside the first container 5a. In addition, the refrigerant liquid 18 is dripped from a plurality of positions toward the first heat transfer tube group 6f, where the positions are determined at the first interval P1 along the longitudinal direction of the first heat transfer tubes 6a.
(II) A second heat medium is supplied into the plurality of second heat transfer tubes 6b included in the second heat transfer tube group 6s, where the second heat transfer tubes 6b are arranged in rows and columns inside the second container 5b. In addition, the solution 26 is dripped from a plurality of positions toward the second heat transfer tube group 6s, where the positions are determined at the second interval P2 along the longitudinal direction of the second heat transfer tubes 6b.
(III) The second interval P2 is smaller than the first interval P1.

### (Embodiment 2)

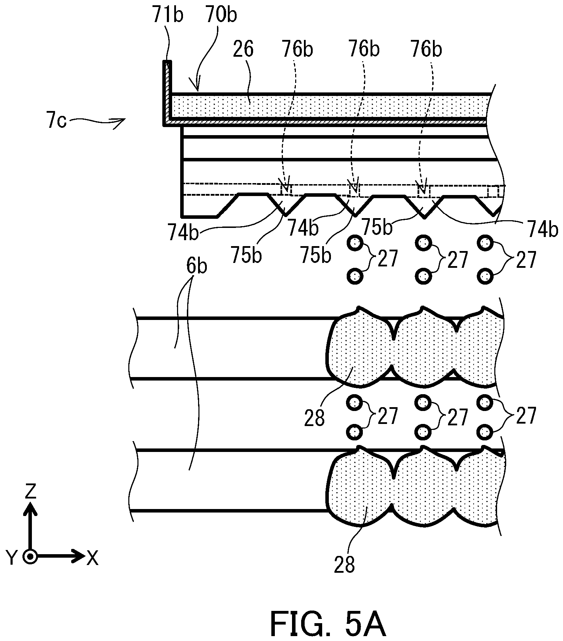

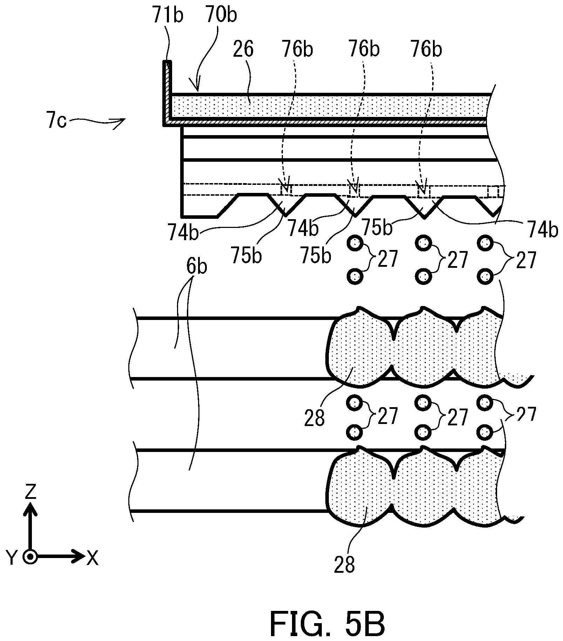

Embodiment 2 will be described below with reference to FIG. 5A and FIG. 5B. A heat exchange unit according to Embodiment 2 has a similar configuration to that of the heat exchange unit 1 according to Embodiment 1 except portions as otherwise particularly described. A second drip feed 7c according to Embodiment 2 shown in FIG. 5A has a similar configuration to that of the second drip feed 7b except portions as otherwise particularly described. The constituent elements of the second drip feed 7c that are identical to or correspond to those of the second drip feed 7b are denoted by the same reference numerals, and detailed descriptions thereof will be omitted. The description of Embodiment 1 also applies to Embodiment 2 unless the descriptions are technically contradictory.

### [2-1. Configuration]

As shown in FIG. 5A, in the second drip feed 7c, the second portions 74b each have the second pointed portion 75b that is tapered and protrudes toward the second heat transfer tube group 6s. The second pointed portion 75b is sharper than the first pointed portion 75a. In other words, the width of a second projection at a position away from the pointed end of the second projection by a specific distance is smaller than the width of a first projection at a position away from the pointed end of the first projection by a specific distance. The second projection is obtained by projecting, on a plane parallel to the longitudinal direction of the second heat transfer tubes 6b, the second pointed portion 75b in the direction perpendicular to the longitudinal direction of the second heat transfer tubes 6b. The first projection is obtained by projecting, on a plane parallel to the longitudinal direction of the first heat transfer tubes 6a, the first pointed portion 75a in the direction perpendicular to the longitudinal direction of the first heat transfer tubes 6a.

### [2-2. Operations]

As for the second drip feed 7c configured as above, its operations and functions will be described below. In the case where an absorption refrigerator including the heat exchange unit 1 operates at about 50% load, the amount of the refrigerant vapor to be generated by the evaporator 2 and absorbed by the absorber 3 is reduced by about half. On the other hand, the circulation amount of the refrigerant liquid 18 to be dripped by the first drip feed 7a toward the first heat transfer tube group 6f is constant independently of the load of the absorption refrigerator, and is, for example, about 30 L/min. This is because, owing to the operation of the first pump 8, the refrigerant liquid 18 stored in the first container 5a circulates inside and outside the evaporator 2 through the circulation path 9. In contrast, the flow rate of the solution 26 to be dripped by the second drip feed 7c is determined depending on the load of the absorption refrigerator. Accordingly, in the case where the absorption refrigerator operates at about 50% load, the flow rate of the solution 26 to be dripped by the second drip feed 7c is, for example, about 8 L/min, which is about one-quarter of the flow rate of the refrigerant liquid 18.

As shown in FIG. 5A and FIG. 5B, the solution 26 supplied through the second supply path 14 is stored in the storage space 70b. The solution 26 stored in the storage space 70b flows down while being distributed through the plurality of distribution holes 72b arranged in the longitudinal direction of the tray 71b. The solution 26 is guided onto the inclined surface of the holder 73b to flow down the surface of the holder 73b. Next, the solution 26 is guided to the drain 78b to be stored again. Subsequently, the solution 26 is distributed again through the plurality of openings 76b arranged in the longitudinal direction of the tray 71b to flow down. The solution 26, which has passed through the opening 76b, is guided to the second portions 74b to be dripped from the second pointed portions 75b of the second portions 74b. At this time, the solution 26 flows down to be dripped in such a state as to be inscribed in the second projection of the second pointed portion 75b, for example. FIG. 5A and FIG. 5B respectively show the states of the liquid films 28 of the solution 26 as of a time t and a time t + Δt.

### [2-3. Effects, etc.]

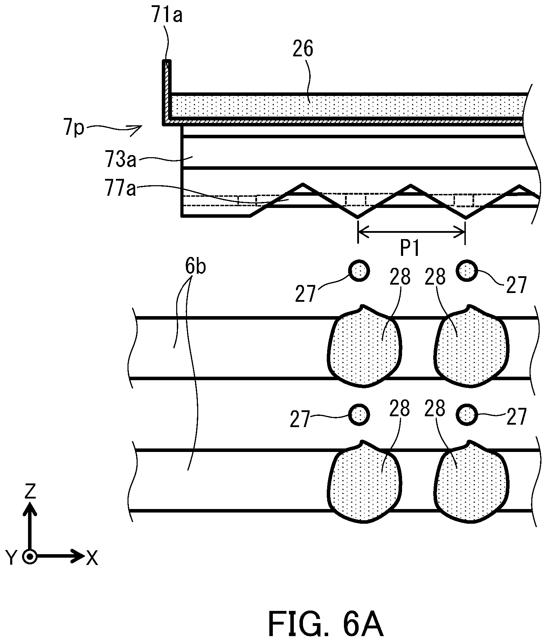

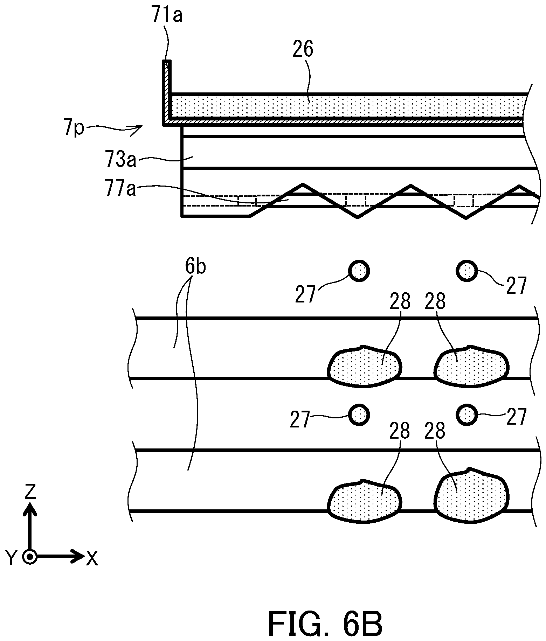

As described above, in the present embodiment, the second pointed portion 75b is sharper than the first pointed portion 75a. For example, in the case where an absorption refrigerator including the heat exchange unit of the present embodiment operates at about 50% load, the solution 26 to be dripped by the second drip feed 7c has a greatly reduced flow rate. The flow rate is, for example, one-quarter of the flow rate of the refrigerant liquid 18 to be dripped by the first drip feed 7a, and can be half of the flow rate of the solution 26 to be dripped by the second drip feed 7c in the case of the rated operation of the absorption refrigerator. For example, the case will be considered where the drip feed 7p according to the reference example is used instead of the second drip feed 7c as shown in FIGS. 6A and 6B. In this case, although the liquid films 28 spread over a wide range of the surfaces of the second heat transfer tubes 6b at the time t, the area of the surfaces of the second heat transfer tubes 6b covered with the liquid films 28 decreases at the time t + Δt. This can result in a temporally nonuniform wet state of the surfaces of the second heat transfer tubes 6b relative to the solution 26. This is because the droplets 27 of the solution 26 have an almost equal diameter to that of the droplets 24 of the refrigerant liquid 18, which is a relatively large diameter.

On the other hand, in the present embodiment, the second pointed portion 75b is sharper than the first pointed portion 75a, and the solution 26 flows down this sharper second pointed portion 75b to be dripped. Accordingly, the droplets 27 of the solution 26 have a small diameter. In the case where the second drip feed 7c and the drip feed 7p are equal in terms of the flow rate of the solution 26, the second drip feed 7c has a shorter time interval of dripping the solution 26. In other words, the solution 26 is continuously dripped toward the second heat transfer tube group 6s in a temporally uniform state. This suppresses the temporal nonuniformity of the wet state of the solution 26 on the surfaces of the second heat transfer tubes 6b even in the case where the absorption refrigerator including the heat exchange unit of the present embodiment operates at about 50% load with a small flow rate of the solution 26. Accordingly, the liquid films 28 can be formed favorably on the surfaces of the second heat transfer tubes 6b.

### (Embodiment3)

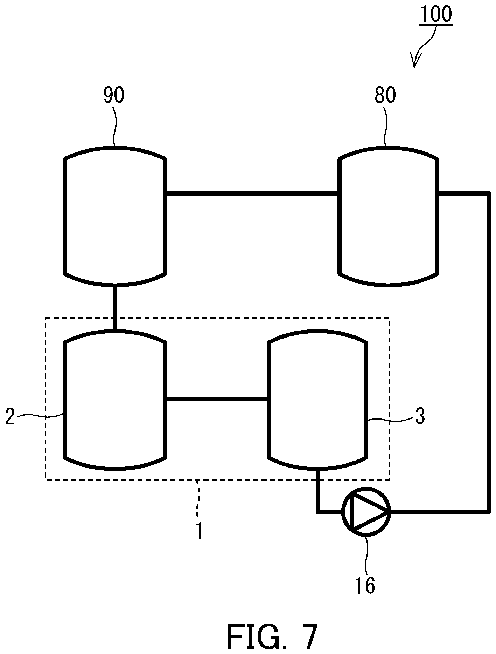

Embodiment 3 will be described below with reference to FIG. 7.

### [3-1. Configuration]

As shown in FIG. 7, an absorption refrigerator 100 includes the heat exchange unit 1. The absorption refrigerator 100 further includes, for example, a regenerator 80 and a condenser 90. The absorption refrigerator 100 is, for example, an absorption refrigerator of the single-effect cycle.

### [3-2. Operations]

As for the absorption refrigerator 100 configured as above, its operations and functions will be described below. The solution 26 stored in the second container 5b is guided to the regenerator 80 through the discharge path 15. In the regenerator 80, the solution 26 is heated to increase the solute concentration. The solution 26 with the increased solute concentration is guided to the absorber 3 through the second supply path 14. Meanwhile, the heating of the solution 26 in the regenerator 80 generates a refrigerant vapor. This refrigerant vapor is guided to the condenser 90, and is cooled to be condensed in the condenser 90. Thus, a refrigerant liquid is generated. For example, the refrigerant liquid is reduced in pressure and then is guided to the evaporator 2 through the first supply path 13.

### [3-3. Effects]

As described above, in the present embodiment, the absorption refrigerator 100 includes the heat exchange unit 1. In the heat exchange unit 1, the liquid films 28 of the solution 26 are uniformly formed on the surfaces of the second heat transfer tubes 6b, easily increasing the wettability of the second heat transfer tubes 6b relative to the solution 26. Accordingly, the coefficient of performance (COP) of the absorption refrigerator 100 is easily increased.

### (Other Embodiments)

As described above, Embodiments 1, 2, and 3 have been described as exemplary techniques disclosed in the present application. However, the technique according to the present disclosure is not limited to these, and is also applicable to embodiments with modifications, replacements, additions, omissions, and the like. Furthermore, it is also possible to combine the constituent elements described in Embodiments 1 and 2 above to achieve a new embodiment. Thus, other embodiments will be exemplified below.

In Embodiment 1, as one configuration example of the first drip feed 7a, the description has been given on the configuration in which the tray 71a, the holder 73a, and the slit component 77a are included. The first drip feed 7a only needs to be capable of dripping the refrigerant liquid from the plurality of first portions 74a toward the first heat transfer tube group 6f. Accordingly, the first drip feed 7a is not limited to the configuration in which the tray 71a, the holder 73a, and the slit component 77a are included. However, in the case where the first drip feed 7a has such a configuration, the refrigerant liquid is easily distributed in the longitudinal direction of the first heat transfer tubes 6a.

In Embodiments 1 and 2, as one configuration example of the second drip feeds 7b and 7c, the description has been given on the configuration in which the tray 71b, the holder 73b, and the slit component 77b are included. The second drip feeds 7b and 7c only need to be capable of dripping the solution from the plurality of second portions 74b toward the second heat transfer tube group 6s. Accordingly, the second drip feeds 7b and 7c are not limited to the configuration in which the tray 71b, the holder 73a, and the slit component 77a are included. However, in the case where the second drip feeds 7b and 7c have such a configuration, the solution is easily distributed in the longitudinal direction of the second heat transfer tubes 6b.

In Embodiments 1 and 2, the first portions 74a have been described as having the first pointed portions 75a, which are tapered and protrude toward the first heat transfer tube group 6f, and the second portions 74b have been described as having the second pointed portions 75b, which are tapered and protrude toward the second heat transfer tube group 6s. The first portions 74a and the second portions 74b only need to be capable of dripping the refrigerant liquid and the solution, respectively. Accordingly, the first portions 74a and the second portions 74b do not need to have the first pointed portions 75a that are tapered and the second pointed portions 75b that are tapered, respectively. However, in the case where the first portions 74a have the first pointed portions 75a that are tapered, the diameter of the droplets of the refrigerant liquid to be dripped from the first portions 74a is easily adjusted to a desired size. In addition, in the case where the second portions 74b have the second pointed portions 75b that are tapered, the diameter of the droplets of the solution to be dripped from the second portions 74b is easily adjusted to a desired size.

In Embodiments 1 and 2, the first portions 74a and the second portions 74b both have been described as being plate-like. The first portions 74a and the second portions 74b only need to be capable of dripping the refrigerant liquid and the solution, respectively. Accordingly, the first portions 74a and the second portions 74b are not limited to be plate-like. However, in the case where the first portions 74a and the second portions 74b are plate-like, the first portions 74a and the second portions 74b are easily fabricated. The first portions 74a and the second portions 74b may be conical or pyramidal, and may have a hollow structure.

In Embodiment 3, the description has been given on an absorption refrigerator of the single-effect cycle as one example of the absorption refrigerator 100. The absorption refrigerator 100 only needs to include the heat exchange unit 1. Accordingly, the absorption refrigerator 100 is not limited to an absorption refrigerator of the single-effect cycle. The absorption refrigerator 100 may be an absorption refrigerator of the double-effect cycle or the triple-effect cycle. In the case where a gas burner is used as the heat source for the regenerator 80, the absorption refrigerator 100 can be a gas chiller.

### INDUSTRIAL APPLICABILITY

The present disclosure is applicable to absorption refrigerators that are adapted to central air conditioners for buildings, chillers for process cooling, and the like.

## Claims

1. A heat exchange unit (1) for an absorption refrigerator, comprising:
a first container (5a);
a first heat transfer tube group (6f) including a plurality of first heat transfer tubes (6a) arranged in rows and columns inside the first container (5a);
a first drip feed (7a) having a plurality of first portions (74a) for dripping arranged along a longitudinal direction of the first heat transfer tubes (6a), the first drip feed being configured to drip a refrigerant liquid from the first portions toward the first heat transfer tube group (6f);
a second container (5b);
a second heat transfer tube group (6s) including a plurality of second heat transfer tubes (6b) arranged in rows and columns inside the second container (5b); and
a second drip feed (7b) having a plurality of second portions (74b) for dripping arranged along a longitudinal direction of the second heat transfer tubes (6b), the second drip feed being configured to drip a solution from the second portions toward the second heat transfer tube group (6s),
**characterised in that**
an interval between the second portions (74b) adjacent to each other in the longitudinal direction of the second heat transfer tubes (6b) is smaller than an interval between the first portions (74a) adjacent to each other in the longitudinal direction of the first heat transfer tubes (6a).

2. The heat exchange unit (1) for an absorption refrigerator according to claim 1, wherein
the first portions (74a) each have a first pointed portion (75a) that is tapered and protrudes toward the first heat transfer tube group (6f), and
the second portions (74b) each have a second pointed portion (75b) that is tapered and protrudes toward the second heat transfer tube group (6s), and
the second pointed portion (75b) is sharper than the first pointed portion (75a).

3. An absorption refrigerator comprising the heat exchange unit (1) according to claim 1 or 2.

4. A method for heat exchange for an absorption refrigerator comprising:
supplying a first heat medium into a plurality of first heat transfer tubes (6a) included in a first heat transfer tube group (6f), the first heat transfer tubes being arranged in rows and columns inside a first container (5a), and dripping a refrigerant liquid (18) from a plurality of positions toward the first heat transfer tube group, the positions being determined at a first interval (P1) along a longitudinal direction of the first heat transfer tubes; and
supplying a second heat medium into a plurality of second heat transfer tubes (6b) included in a second heat transfer tube group (6s), the second heat transfer tubes being arranged in rows and columns inside a second container (5b), and dripping a solution (26) from a plurality of positions toward the second heat transfer tube group, the positions being determined at a second interval (P2) along a longitudinal direction of the second heat transfer tubes,
**characterised in that**
the second interval (P2) is smaller than the first interval (P1).

## Patentansprüche

1. Wärmetauschereinheit (1) für eine Absorptionskältemaschine, umfassend:
einen ersten Behälter (5a);
eine erste Wärmeübertragungsrohrgruppe (6f), die mehrere erste Wärmeübertragungsrohre (6a) enthält, die in Reihen und Spalten innerhalb des ersten Behälters (5a) angeordnet sind;
eine erste Tropfzuführung (7a), die mehrere erste Abschnitte (74a) zum Tropfen aufweist, die entlang einer Längsrichtung der ersten Wärmeübertragungsrohre (6a) angeordnet sind, wobei die erste Tropfzuführung dazu konfiguriert ist, eine Kältemittelflüssigkeit von den ersten Abschnitten in Richtung zu der ersten Wärmeübertragungsrohrgruppe (6f) zu tropfen;
einen zweiten Behälter (5b);
eine zweite Wärmeübertragungsrohrgruppe (6s), die mehrere zweite Wärmeübertragungsrohre (6b) enthält, die in Reihen und Spalten innerhalb des zweiten Behälters (5b) angeordnet sind; und
eine zweite Tropfzuführung (7b), die mehrere zweite Abschnitte (74b) zum Tropfen aufweist, die entlang einer Längsrichtung der zweiten Wärmeübertragungsrohre (6b) angeordnet sind, wobei die zweite Tropfzuführung dazu konfiguriert ist, eine Lösung von den zweiten Abschnitten in Richtung zu der zweiten Wärmeübertragungsrohrgruppe (6s) zu tropfen,
**dadurch gekennzeichnet, dass**
ein Intervall zwischen den zweiten Abschnitten (74b), die in Längsrichtung der zweiten Wärmeübertragungsrohre (6b) zueinander benachbart sind, kleiner ist als ein Intervall zwischen den ersten Abschnitten (74a), die in Längsrichtung der ersten Wärmeübertragungsrohre (6a) zueinander benachbart sind.

2. Wärmetauschereinheit (1) für eine Absorptionskältemaschine nach Anspruch 1, wobei
die ersten Abschnitte (74a) jeweils einen ersten spitzen Abschnitt (75a) aufweisen, der sich verjüngt und in Richtung zu der ersten Wärmeübertragungsrohrgruppe (6f) hervorsteht, und
die zweiten Abschnitte (74b) jeweils einen zweiten spitzen Abschnitt (75b) aufweisen, der sich verjüngt und in Richtung zu der zweiten Wärmeübertragungsrohrgruppe (6s) hervorsteht, und
der zweite spitze Abschnitt (75b) schärfer ist als der erste spitze Abschnitt (75a).

3. Absorptionskältemaschine, die die Wärmetauschereinheit (1) nach Anspruch 1 oder 2 umfasst.

4. Verfahren zum Wärmetausch für eine Absorptionskältemaschine, umfassend:
Zuführen eines ersten Wärmemediums in mehrere erste Wärmeübertragungsrohre (6a), die in einer ersten Wärmeübertragungsrohrgruppe (6f) enthalten sind, wobei die ersten Wärmeübertragungsrohre in Reihen und Spalten innerhalb eines ersten Behälters (5a) angeordnet sind, und Tropfen einer Kältemittelflüssigkeit (18) von mehreren Positionen in Richtung zu der ersten Wärmeübertragungsrohrgruppe, wobei die Positionen in einem ersten Intervall (P1) entlang einer Längsrichtung der ersten Wärmeübertragungsrohre festgelegt sind; und
Zuführen eines zweiten Wärmemediums in mehrere zweite Wärmeübertragungsrohre (6b), die in einer zweiten Wärmeübertragungsrohrgruppe (6s) enthalten sind, wobei die zweiten Wärmeübertragungsrohre in Reihen und Spalten innerhalb eines zweiten Behälters (5b) angeordnet sind, und Tropfen einer Lösung (26) von mehreren Positionen in Richtung zu der zweiten Wärmeübertragungsrohrgruppe, wobei die Positionen in einem zweiten Intervall (P2) entlang einer Längsrichtung der zweiten Wärmeübertragungsrohre festgelegt sind,
**dadurch gekennzeichnet, dass**
das zweite Intervall (P2) kleiner ist als das erste Intervall (P1).

## Revendications

1. Unité d'échange de chaleur (1) pour un réfrigérateur à absorption, comprenant :
un premier contenant (5a) ;
un premier groupe de tubes caloporteurs (6f) comprenant une pluralité de premiers tubes caloporteurs (6a) disposés en rangées et en colonnes à l'intérieur du premier contenant (5a) ;
une première alimentation goutte à goutte (7a) présentant une pluralité de premières parties (74a) pour l'égouttage disposées le long d'une direction longitudinale des premiers tubes caloporteurs (6a), la première alimentation goutte à goutte étant configurée pour égoutter un liquide réfrigérant des premières parties vers le premier groupe de tubes caloporteurs (6f) ;
un deuxième contenant (5b) ;
un deuxième groupe de tubes caloporteurs (6s) comprenant une pluralité de deuxièmes tubes caloporteurs (6b) disposés en rangées et en colonnes à l'intérieur du deuxième contenant (5b) ; et
une deuxième alimentation goutte à goutte (7b) présentant une pluralité de deuxièmes parties (74b) pour l'égouttage disposées le long d'une direction longitudinale des deuxièmes tubes caloporteurs (6b), la deuxième alimentation goutte à goutte étant configurée pour égoutter une solution des deuxièmes parties vers le deuxième groupe de tubes caloporteurs (6s),
**caractérisée en ce**
**qu'**un intervalle entre les deuxièmes parties (74b) adjacentes les unes aux autres dans la direction longitudinale des deuxièmes tubes caloporteurs (6b) est inférieur à un intervalle entre les premières parties (74a) adjacentes les unes aux autres dans la direction longitudinale des premiers tubes caloporteurs (6a).

2. Unité d'échange de chaleur (1) pour un réfrigérateur à absorption selon la revendication 1,
les premières parties (74a) présentant chacune une première partie pointue (75a) qui est effilée et fait saillie vers le premier groupe de tubes caloporteurs (6f), et
les deuxièmes parties (74b) présentant chacune une deuxième partie pointue (75b) qui est effilée et fait saillie vers le deuxième groupe de tubes caloporteurs (6s), et
la deuxième partie pointue (75b) étant plus aiguë que la première partie pointue (75a).

3. Réfrigérateur à absorption comprenant l'unité d'échange de chaleur (1) selon la revendication 1 ou 2.

4. Procédé d'échange de chaleur pour un réfrigérateur à absorption comprenant :
la fourniture d'un premier agent de chauffage dans une pluralité de premiers tubes caloporteurs (6a) inclus dans un premier groupe de tubes caloporteurs (6f), les premiers tubes caloporteurs étant disposés en rangées et en colonnes à l'intérieur d'un premier contenant (5a), et l'égouttage d'un liquide réfrigérant (18) d'une pluralité de positions vers le premier groupe de tubes caloporteurs, les positions étant déterminées à un premier intervalle (P1) le long d'une direction longitudinale des premiers tubes caloporteurs ; et
la fourniture d'un deuxième agent de chauffage dans une pluralité de deuxièmes tubes caloporteurs (6b) inclus dans un deuxième groupe de tubes caloporteurs (6s), les deuxièmes tubes caloporteurs étant disposés en rangées et en colonnes à l'intérieur d'un deuxième contenant (5b), et l'égouttage d'une solution (26) d'une pluralité de positions vers le deuxième groupe de tubes caloporteurs, les positions étant déterminées à un deuxième intervalle (P2) le long d'une direction longitudinale des deuxièmes tubes caloporteurs,
**caractérisée en ce**
**que** le deuxième intervalle (P2) est inférieur au premier intervalle (P1).
